# EUROPEAN PATENT SPECIFICATION

(11) **EP 3 855 998 B1**
(45) Date of publication and mention of the grant of the patent: **26.03.2025**
(21) Application number: 19790794.2
(22) Date of filing: 24.09.2019
(51) Int. Cl.: A47L 15/42, D06F 39/08

(54) **DIVERTER DEVICE FOR MANAGING FLOWS OF LIQUID, IN PARTICULAR IN HOUSEHOLD APPLIANCES, SUCH AS WASHING MACHINES, DISHWASHERS OR THE LIKE**
UMLENKVORRICHTUNG ZUR VERWALTUNG VON FLÜSSIGKEITSSTRÖMUNGEN, INSBESONDERE BEI HAUSHALTSGERÄTEN, WIE WASCHMASCHINEN, GESCHIRRSPÜLMASCHINEN ODER DERGLEICHEN
DISPOSITIF DE DÉVIATION POUR GÉRER DES FLUX DE LIQUIDES, EN PARTICULIER DANS DES APPAREILS ÉLECTROMÉNAGERS TELS QUE DES LAVES-LINGE, DES LAVE-VAISSELLE OU AUTRES

(30) Priority: 26.09.2018 IT 201800008945
(43) Date of publication of application: 04.08.2021
(73) Proprietor: Elettrotecnica Rold S.R.L., 20014 Nerviano (IT)
(72) Inventor: ROCCHITELLI, Stefano, 20010 Pogliano Milanese (IT); MANSUTTI, Alessandro, 33030 Coseano (IT); BERETTA, Niccolò, 20120 Milano (IT)
(74) Representative: Lualdi, Lorenzo
(86) International application number: PCT/IB2019/058069
(87) International publication number: WO 2020/065510

(56) References cited:
- EP-A1- 1 264 570
- US-A1- 2015 182 099

## Description

### TECHNICAL FIELD OF THE INVENTION

The present invention relates to the field of electrical household appliances, such as washing machines, dishwashers and/or similar appliances. In particular, the present invention relates to a diverter device for managing flows of fluids, in particular of liquids. In detail, the present invention relates to a device of the aforesaid type for managing of the flows of fluid, in particular liquids, in household appliances, such as washing machines, dishwashers or the like, adapted to allow, for example during the operation of the appliance, a management of the fluids, in particular of the liquids, in accordance with the operating methods of the household appliance itself and therefore, in the case of a washing machine, in accordance with the requirements arising from washing cycles, such as main washing, rinsing, soaking, spinning, etc. The present invention further relates to a hydraulic system or circuit comprising a diverter device of the aforesaid type and to a household appliance (e.g. a washing machine or similar household appliance) equipped with a device and/or system of the aforementioned type.

### BACKGROUND ART

In the field of household appliances, in particular of washing machines, the need is known to optimize the management of the liquids. Indeed, the latest generation of household appliances offers the possibility for the user to choose between different washing programs, each of which is provided for a particular type of laundry and/or for different washing needs (e.g. more or less soiled laundry); washing programs are widely used for delicate garments, colored garments, sheets or durable garments, etc., as well as for removing particularly tough stains, such as grease stains, paint or the like. The aforesaid programs further provide the use of different products; for example, some programs provide the use of softeners, disinfectants or the like, in addition to detergent, wherein a product (e.g. detergent and/or softener) may be of different type (e.g. powder or liquid).

The latest generation washing machines are, therefore, equipped with a number of trays for simultaneously storing different products, e.g. one or more detergents, one or more softeners, etc., wherein at the time of use, the products are taken from the storage trays by introducing water into the trays themselves.

For this purpose, the most common solutions implemented in the most widespread household appliances provide the use of flow diverters by means of which the water entering through a main inlet is diverted (delivered) towards various destinations, e.g. towards the storage trays accordingly on the basis of the washing program or possibly even directly into the basket.

The most common diverter devices provide, in particular, the use of a plurality of solenoid valves arranged both along the main inlet pipe and along the various secondary delivery pipes, wherein the various open and closed solenoid valve combinations each correspond to the delivery of water from the main inlet pipe or conduit towards one or more predetermined delivery destinations by means of one or more corresponding delivery pipes, respectively.

The diverter devices and/or systems according to the prior art, in particular those with solenoid valves briefly summarized above, although appreciable from many points of view (high standardization and easy availability), have several drawbacks.

A first drawback is unquestionably that of the total cost generated by the unit cost of the solenoid valves, and therefore substantially proportional to the number of solenoid valves used, the cost being often incompatible with the applicable prices, especially for lower level and quality appliances. It is also worth noting that the cost of the solenoid valves must be added to the cost of the circuitry necessary for their operation.

A second disadvantage is represented by maintenance costs, wherein the failure of a solenoid valve often involves the need to replace the entire diverter device.

A further drawback and/or disadvantage is the high consumption of electricity, which often results in very high operating costs.

Furthermore, a drawback is the high noise level and/or by the limited durability and reduced reliability, a total number of operating (closing - opening) cycles being predictable for each solenoid valve, wherein the noise is also due to the fact that the water flows through the storage trays even no withdrawal of the product (detergent, softener and/or the like) contained therein is required. Furthermore, an additional solenoid valve would be needed to deliver the water directly to the washing tank (bypassing the trays and thus avoiding the aforesaid noise). Furthermore, the dimension of the device is often incompatible with the increasingly felt need to keep the size of the appliance as small as possible. Perhaps the most serious drawback of solenoid valve systems according to the prior art is their very low modularity, wherein the known systems are each made for a predetermined application and cannot be modified and adapted to different applications. This drawback thus forces appliance manufacturers to find and use a considerable number of different systems, with obvious logistic and management problems. Therefore, the need is felt for solutions based on the use of common and standard components, which can be assembled according to different combinations (particularly, by number) for generating different systems intended for respectively different applications.

Examples of flow diverter devices according to the prior art are known from documents US 2015/182099, EP 1264570 and US 2015/182096.

It is thus the main object of the present invention to overcome, or at least minimize, the drawbacks outlined above and found in the devices and/or systems for diverting and/or managing liquids according to the prior art.

In particular, it is a first object of the present invention to provide a diverter device which allows a number of deviations (more generally, a management) which can be selected simply and reliably and wherein the management of flows by means of the device according to the invention implies low management costs (low energy consumption).

Furthermore, the present invention intends to make a low-cost diverter device, of small size and dimensions, and of quiet operation, characterized by construction simplicity and high modularity, and which can thus be assembled according to different combinations using a large number of common components.

According to the present invention, it must also be possible to make the diverter device using simple and therefore cost-effective methods, and the diverter device must be adapted to guarantee the aforesaid objects for a long period of time, in particular even after a large number of operating cycles.

Furthermore, it is a further object of the present invention to suggest a diverter device and/or system adapted to be installed in a plurality of household appliances of the known type in equally simple manner and at equally low cost, without requiring substantial changes to said household appliances.

Finally, it is a further purpose of the present invention to suggest a diverter device of the aforesaid type adapted to be activated (switched, see the following description), either by means of a high-voltage power source (e.g. an electric motor) or by a low-voltage power source (preferable in terms of safety).

### DESCRIPTION OF THE PRESENT INVENTION

The present invention is based on the general consideration that the aforesaid purposes can be achieved by means of a device which comprises a first tubular body, which defines an inner space and which comprises an inlet opening (for the introduction of said fluids into said inner space), and a plurality of first radial draining and delivering openings for draining or delivering said fluids from said inner space, said device comprising a second tubular closing and diverting body accommodated in said inner space, said second tubular closing and diverting body comprising a plurality of second radial draining and delivering openings and being switchable by rotation and positioned in a plurality of positions, each with a different radial orientation, wherein the locking and diverting element can be switched (in particular rotated) and positioned in different positions, wherein with said second tubular body in each of said positions at least one of said second radial draining and delivering openings is positioned at at least one of said first radial draining and delivering openings.

A further consideration underlying the present invention is that when either one or both of said first and second tube bodies are made using sections which can be mutually constrained according to different radial orientations, the number of possible diversion and draining methods will substantially correspond to the product of the number of said possible orientations of directions of said sections. Furthermore, the closing and switching element can be made of inexpensive materials, such as plastic or the like, and therefore with direct advantages in terms of reduced manufacturing and maintenance costs, as well as in terms of high resistance to fluids, in particular to water.

On the basis of the aforesaid considerations, and in consideration of the problems and/or drawbacks encountered in the devices and/or closing systems according to the prior art, a first embodiment of the present invention relates to a flow diverter device for managing the flows of fluids, such as gases and/or liquids, in particular in household appliances, such as washing machines, dishwashers and similar household appliances, said device comprising a first tubular body, which defines an inner space and comprises an inlet opening for the introduction of said fluids into said inner space, and a plurality of first radial draining and delivering openings for draining or delivering said fluids from said inner space, wherein said device comprises a second tubular closing and diverting body accommodated in said inner space, said second tubular closing and diverting body comprising a plurality of second radial draining and delivering openings and it being possible to be switched by rotation and positioned in a plurality of positions, each with a different radial orientation, wherein said device comprises means accommodated in said inner space for putting said second tubular body into rotation from the inside, wherein said means engage an end portion of said second tubular closing and diverting body, and thus in that the operation of said means results in switching by rotation of said second tubular closing and delivering body and in the positioning at least one of said second radial draining and delivering openings at at least one of said first radial draining and delivering openings, said means for putting said second tubular body into rotation from the inside engage the end portion of said second tubular body positioned further upstream with respect to said inlet opening. According to an embodiment, said means for putting said second tubular body into rotation from the inside comprise a shaft adapted to be rotated about a rotation axis, substantially parallel to the common longitudinal axis of said first tubular body and said second tubular body, by electromechanical means, such as an electric motor or the like. According to an embodiment, the rotation of the electric motor is measured by an electrical or electronic system, e.g. by means of an encoder, adapted to identify the instantaneous position of the aforesaid motor and/or the aforesaid tubular bodies.

According to an embodiment, said second tubular body consists of a plurality of mutually constrained but mutually releasable sections.

According to an embodiment, each of said sections comprises a female-type end portion and an opposite male-type end portion.

According to an embodiment, each of said female-type end portions defines a flare adapted to receive a male-type end portion, and when the inner surface of said flare comprises a plurality of projections radially arranged, each of said projections being adapted to engage a corresponding recess or notch of a male-type end portion.

According to an embodiment, wherein the adjacent sections of said second tubular body can be mutually connected according to a plurality of different mutual radial orientations.

According to an embodiment, wherein said first tubular body consists of a plurality of mutually connected but mutually releasable sections.

According to an embodiment, each of said sections of said first tubular body comprises a female-type end portion and an opposite male-type end portion.

According to an embodiment, each of said female-type end portions defines a flare adapted to receive a male-type end portion, wherein said flare defines a plurality of tapered radial openings each adapted to be engaged by a projection of a male-type end according to a bayonet-like connection or the like.

According to an embodiment, the adjacent sections of said first tubular body can be mutually connected according to a plurality of different mutual radial orientations.

According to an embodiment, said device comprises electromechanical means for the operation of said means accommodated in said inner space for putting said second tubular body into rotation from the inside.

According to an embodiment, said electromechanical means comprise an electric AC or DC motor coupled to an encoder.

The present invention further relates a hydraulic system or circuit, in particular for household appliances, such as washing machines, dishwashers and similar appliances, wherein said system or circuit comprises a device according to one or more of the embodiments summarized above and a household appliance, such as a washing machine, dishwasher or similar appliance comprising at least one such hydraulic system or circuit.

Further possible embodiments of the present invention are defined in the claims.

### BRIEF DESCRIPTION OF THE FIGURES

Hereafter, the present invention will be further explained by means of the following detailed description of the possible embodiments shown on the drawings, in which corresponding or equivalent features and/or component parts of the present invention are identified by the same reference numbers. It must be noted that the present invention is not limited to the embodiments described below and shown on the accompanying drawings; on the contrary, all the variants and/or changes to the embodiments described below and shown on the accompanying drawings will appear obvious and immediate to a person skilled in the art.

In the drawings:
- Figures 1, 2 and 3 show a longitudinal section view of a dispensing device according to an embodiment of the present invention, respectively;
- Figure 4 shows an exploded perspective view of a device according to an embodiment of the present invention;
- Figures 5 and 6 show perspective views of portions a device according to an embodiment of the present invention and the respective mutual constraining methods;
- Figures 7 and 8 shows longitudinal section views of further components of a device according to an embodiment of the present invention and respective constraining methods;
- Figure 9 shows a perspective view of the mutual positioning of components of a device according to an embodiment of the present invention;
- Figure 10 shows a perspective view of further portions a device according to an embodiment of the present invention and the respective mutual constraining method.

### DETAILED DESCRIPTION OF THE PRESENT INVENTION

The present invention is particularly applied in the field of electrical household appliances, such as washing machines, dishwashers and similar household appliances, these being the reason for which the present invention is described below with particular reference to its applications in the field of electrical household appliances, in particular of a washing machine.

However, it is worth specifying that the possible applications of the present invention are not limited to those described below. On the contrary, the present invention is conveniently applied in all cases in which it is necessary to manage the flows of one or more fluids in reliable manner, e.g. as in the case of irrigation systems or circuits for gardening and/or horticulture or even in the case of gas pipes or the like.

The device according to the embodiment shown in figures from 1 to 3 is identified by reference numeral 100 and comprises a first outer tubular body 8, which defines an inner space 81, the tubular body 8 communicating with the outside through an opening 82 and the diversion 83 thereof, as well as through a plurality of radial openings (obtained in the outer wall, cylindrical in the case shown) 84 and its diversions 85.

The opening 82 and the respective inlet diversion 83 are intended to introduce a fluid into the inner space 81, wherein therefore as shown the diversion 83 is designed to be joined and connected to a main pipe. On the other hand, the openings 84 and draining or delivering diversions 85 thereof are each provided to send the fluid to a different destination (e.g. to the washing product trays of a washing machine), the derivations 85 thus being, as shown, such to be connected to flexible pipes or the like, e.g. by means of cable tie.

Again as shown, the device 100 comprises a second tubular body 9 housed in the inner space 81 defined by the first tubular body 8.

The second tubular body 9 comprises a plurality of radial openings (obtained in the outer wall, which is cylindrical in the case shown), and is also adapted to be put into rotation about the axis X substantially coinciding with the longitudinal symmetry axis of the tubular bodies 8 and 9.

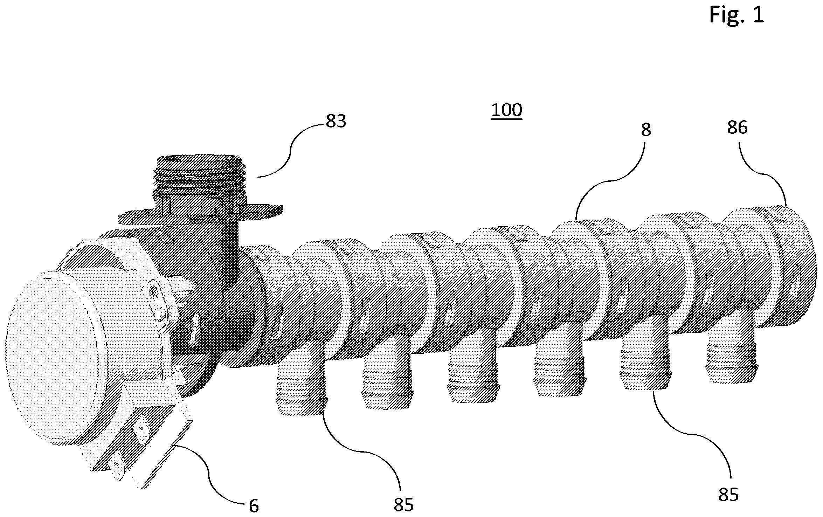

Furthermore, the openings 91 are arranged according to different radial orientations, wherein it is therefore apparent from figures 1 to 3 that the inner body 9 can be positioned according to a plurality of different radial orientations, and that for each of said different radial orientations, at least one of the openings 91 is placed at at least one of the openings 84 and its diversions 85.

It is therefore equally apparent from figures 1 to 3 and from the above that the switching by rotation of the body 8 allows the return of the liquid introduced into space 81 through the inlet opening 82 and diversion 83 therefore as desired by means of one or more of the diversions 85 and thus to different destinations according to the radial orientation of the body 8.

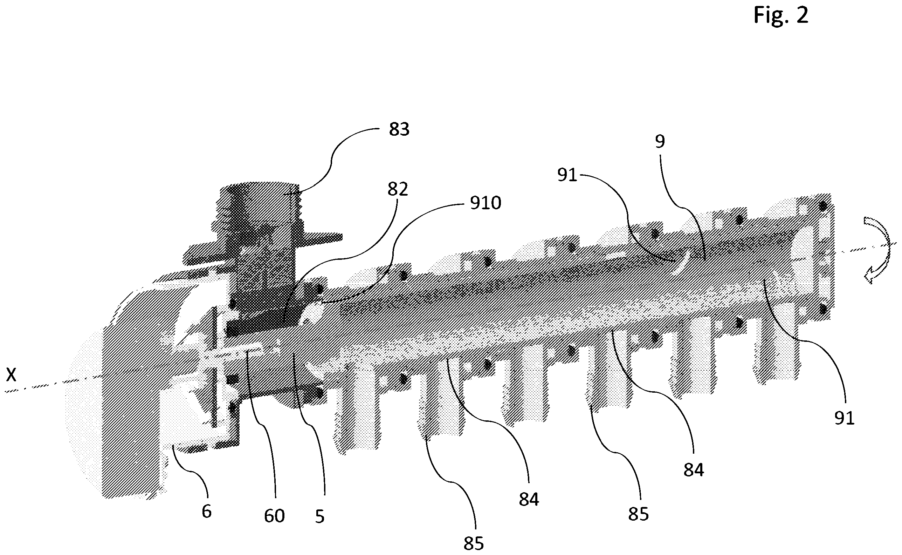

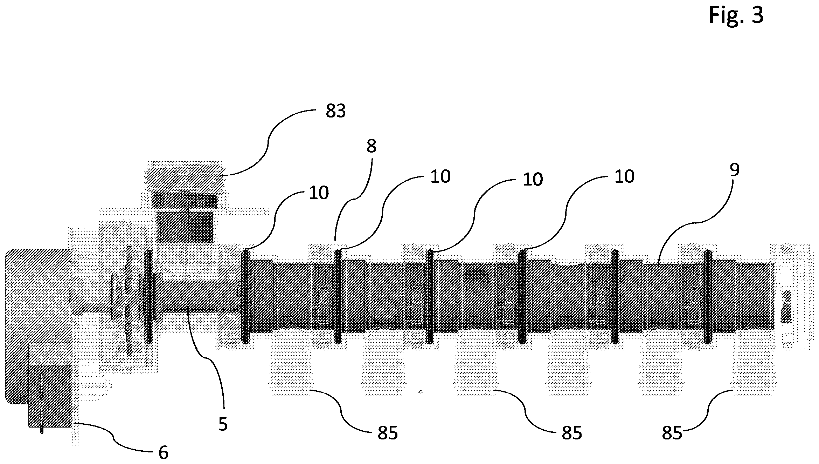

Again with reference to figures 2 and 3, it can be noted that body 9 is put into rotation by means of a shaft 5, in turn rotated by means of an electric motor 6 (e.g. controlled by an encoder), wherein an end portion (on the right in the figures) of the shaft or pin 5 engages the end portion of the body 9 further upstream than the inlet 82, while the portion of the opposite end of shaft 5 (left in the figures) is engaged by the motor shaft 60 of the motor 6. The shaft 5 is housed in the inner space 81 and is arranged coaxial with respect to bodies 8 and 9, wherein therefore the rotary motion to body 9 is imparted from within the space 81.

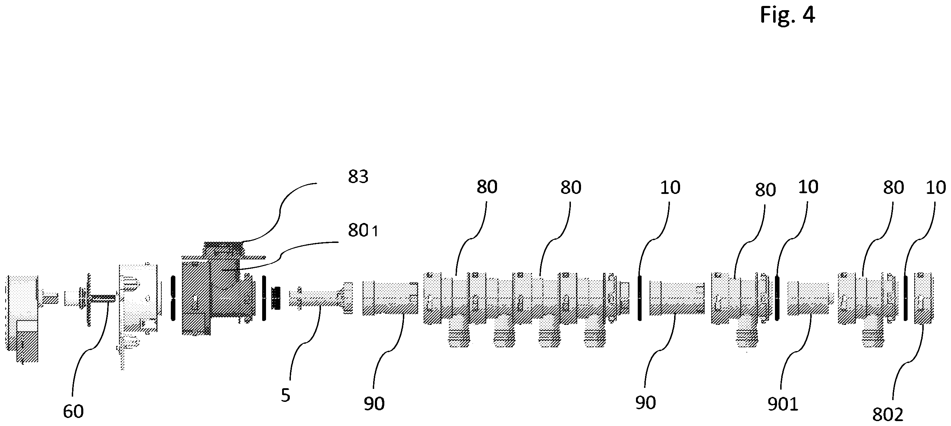

Hereinafter, with reference to figure 4, further features of the device according to the present invention will be described, wherein in figure 4, component parts and/or component parts of the device 100 previously described above with reference to other figures are identified by means of the same reference numerals. As shown in figure 4, the outer tubular body 8 consists of a plurality of sections which are substantially identical to one another 80, by an end cap 802 and by an inlet section 801, the sections 801, 80 and 802 being mutually constrained (can be constrained and released ) to form the outer tubular body 8, a seal 10 (e.g. an O-ring) is interposed between the constraining portions of two contiguous sections to ensure the tightness of the body 8 and thus to prevent fluid leakage.

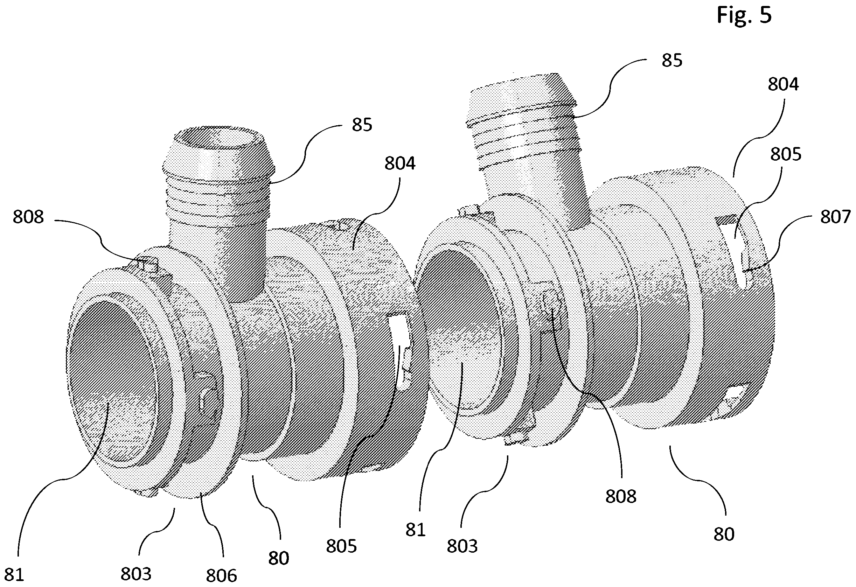

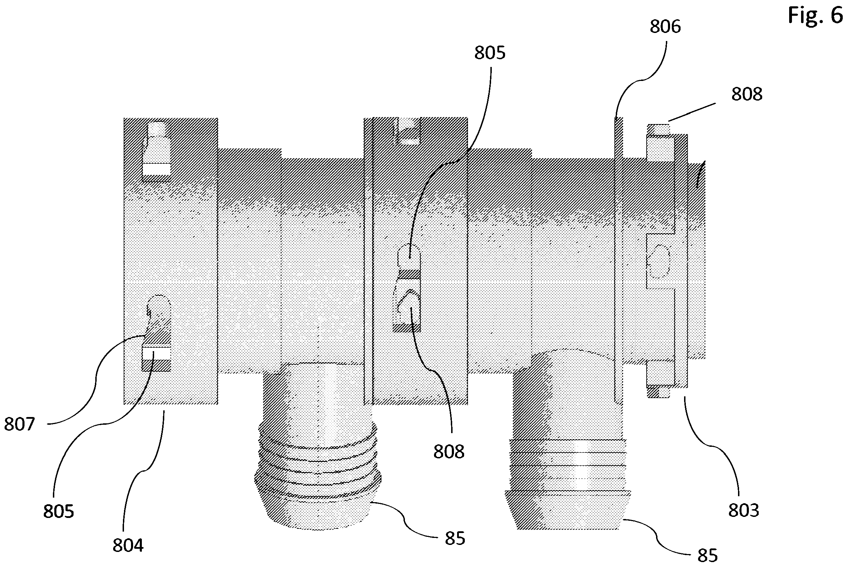

The mutual constraining methods of the sections 80 are illustrated in figures 5 and 6, which show that each section 80 comprises a first female-type end portion 804 and a second male-type portion end 803 (opposite to the first end).

The female-type end portion 804 defines a flare (with a diameter greater than that of the intermediate central portion (which connects the two opposite end portions), wherein the flare 804 comprises a plurality of radial openings 805 of elongated shape, arranged at radial intervals along the circumference of the flare 804 and with longitudinal extension along the circumference of the flare 804, each opening 805 comprising a tapering 807 which results in a progressive decrease in the width of the opening 805, the flare 804 having reduced thickness at the portions of the openings 805 with constant width.

The male-type end portion 803 comprises instead a flange 806 and a number of radial or toothed projections 808 (equal in number to that of the openings 805), wherein the radial extension of the projections 808 is calibrated on the thickness of the diameter of the flare 804 at the openings portions 805 with constant width and so that said projections 808 do not prevent the insertion of the male portion 803 into the female portion 804 of a contiguous section.

The seal 10 is placed on the flange 806 so as to be subjected to elastic deformation by pressure between the flange 806 and a corresponding abutment surface (not shown in the figures) of the adjacent section 80 during the reciprocal constraining of two adjacent sections 80 according to the following methods. Starting from the mutually released configuration in figure 5, the two contiguous sections 80 are progressively approached until the male portion 803 of a section is inserted into the female portion 804 of the adjacent or contiguous section, wherein during this step the two sections are radially oriented so that each projection 808 of a section is arranged at the portion with constant width of a corresponding opening 805 of the contiguous section 80.

During the next step, and in particular when each projection 808 and the respective opening 805 are reciprocally superimposed (in radial direction), one of the two contiguous sections is rotated so as to take each projection or tooth 808 into abutment against the taper 807 of the respective opening 805, wherein the mutual contrast between the projections 808 and the respective tapers 807 results in a further insertion of the male portion 803 into the female portion 804 of the contiguous section 80, and thus in the deformation by pressure of the seal 10. From the above, it can be inferred that the end portions 804 and 803 of sections 80 configure a mutual constraining between two contiguous sections of the so-called bayonet type or the like, and wherein the releasing methods of two contiguous sections are clear and understandable in view of the above, a detailed description is omitted for the sake of brevity.

It is also worth noting that, at least according to an embodiment of the device 100, the male portion 803 and the female portion 804, in particular the teeth 808 and the respective openings 805, are shaped and positioned so as to allow the mutual constraint of two contiguous sections 80 according to a plurality of different radial orientations and that is, so that, with the two contiguous sections 80 mutually constrained, the respective derivations 85 are oriented differently and not parallel. Again with reference to figure 4, it can be noted that the inner tubular body 9 also consists of a plurality of sections which are substantially identical to one another 90 and an end cap 901, the sections 90 and 901 being mutually constrained (can be constrained and released) to form the inner tubular body 9.

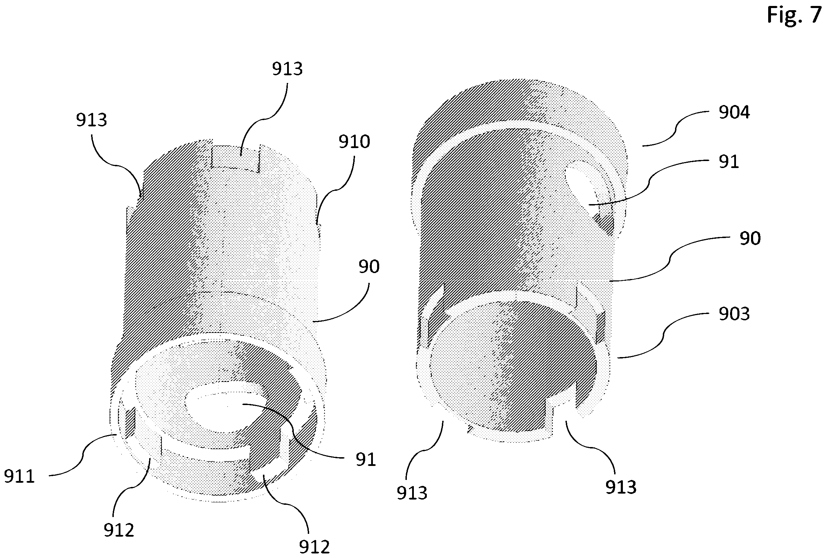

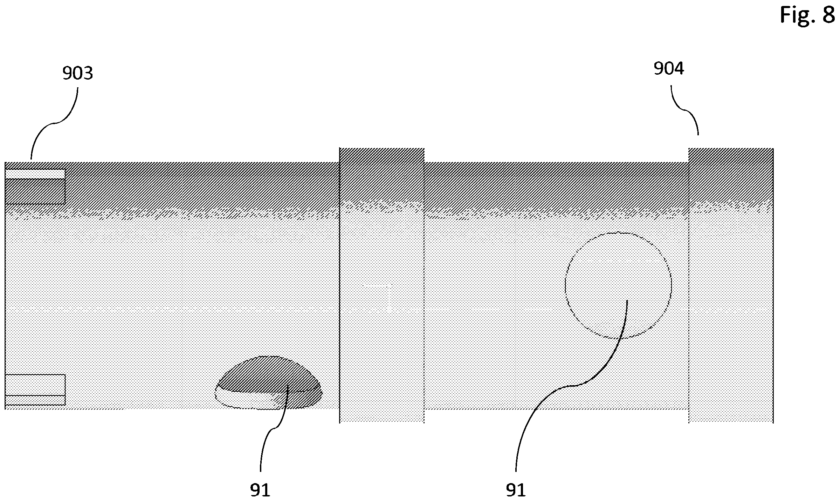

The mutual constraining methods of the sections 90 are illustrated in figures 7 and 8, which show that each section 90 comprises a first female-type end portion 904 and a second male-type portion end 903 (opposite to the first end).

The female-type end portion 904 defines a flare (with a diameter greater than that of the intermediate central portion which connects the two portions of opposite ends), wherein a plurality of radial projections 912 arranged at radial intervals along the circumference of the flare 804 radially extend from the inner surface of the flare 904.

The male end portion 903, on the other hand, comprises a plurality of depressions and/or notches 913 (equal in number to that of the projections 912), wherein the dimensions and arrangement of the projections 912 are calibrated on (geometrically combined with) those of the notches 913 so that the notches 913 can be engaged by positive coupling with said protrusions 912 according to the following procedures.

Starting from the mutually released configuration in figure 7, the two contiguous sections 90 are progressively approached until the male portion 903 of a section is inserted into the female portion 904 of the adjacent or contiguous section, wherein during this step the two sections are radially oriented so that each projection 912 of a section is inserted in the respective notch 913 of the contiguous section 90, in this manner radially constraining the two sections, i.e. so that the rotation of a section translates into the rotation of the other.

As the methods for releasing two contiguous sections 90 are clear and understandable in view of the above, a detailed description thereof is omitted for the sake of brevity.

Therefore, also in this case, it is worth noting that, according to an embodiment of the device 100, the male portion 903 and the female portion 904 (i.e. the projections 912 and the notches 913) are shaped and positioned so as to allow the mutual constraining of two contiguous sections 90 according to a plurality of different radial orientations and that is, so that, with the two contiguous sections 80 mutually constrained, the respective openings 91 are oriented differently.

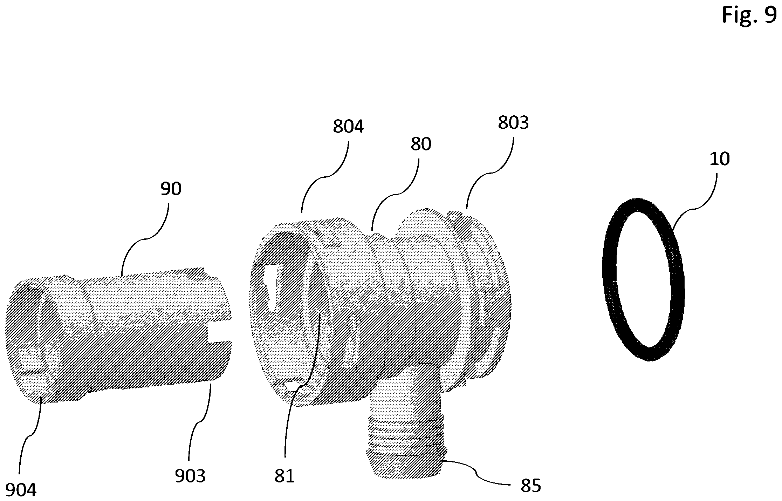

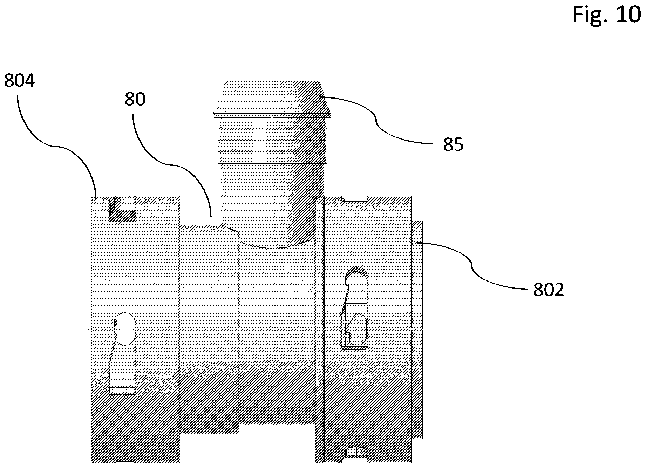

A possible assembly method of the device 10 will be described below with reference again to figure 4 and to figures 9 and 10.

During a first step, the cap 802, which comprises a female-type end portion similar to that of any other section 80, is bound to the male-type portion 803 of a first section 80 (the one intended to be positioned further downstream with respect to the inlet 83) according to the methods described above and by interposing a seal 10 between the cap 802 and the first section 80.

During the next step, the first end section 901 (the one intended to be positioned further downstream with respect to the inlet 83) is inserted into the first section 80. During a further step, the female portion 804 of the first section 80 and the male portion 803 of the contiguous section are constrained to each other according to the aforesaid methods again by interposing a seal 10 between the first section 80 and the contiguous section.

Again, during the next step, a second section 90 is inserted in the second section 80 taking care to mutually constrain the male portion of the second section 90 to the female section of the first section 90 (already housed in the first section 80). The steps above are then repeated until the desired number of sections 80 and 90 are mutually connected.

Subsequently, the male portion of the shaft 5, similar to that of any other section 90, is engaged with the female portion of the last portion 90, thus radially constraining the shaft 5 and section 90 so that the rotation of shaft 5 results in a corresponding rotation of said last section 90 and thus of the entire tubular body 9 as previously assembled.

Then, during the next step, the male portion of the inlet section 801 (similar to that of any other section 80) is engaged with the female portion 804 of the last section 80.

Finally, the electric motor 6 is fixed to the inlet section 801, taking care to engage the motor shaft 60 of the motor 6 and the shaft 5 mutually, thus completing the assembly of the device.

We have thus demonstrated by means of the detailed description of the embodiments of the present invention shown in the drawings given above that the present invention makes it possible to obtain the desired objects and to overcome or at least limit the drawbacks found in the prior art.

In particular, by means of the present invention, a diverter device is made available which allows a number of deviations which can be selected simply and reliably, and wherein the flow management by means of the device according to the invention implies low management costs (low energy consumption). Furthermore, the present invention makes a low-cost diverter device, of small size and dimensions, and of quiet operation, characterized by construction simplicity and high modularity, and which can thus be assembled according to different combinations using a large number of common components.

The diverter device according to the present invention can also be made according to simple and therefore cost-effective manufacturing methods, and it must be adapted to guarantee the aforesaid objects for a long period of time, in particular even after a large number of operating cycles.

Furthermore, the device according to the present invention is adapted to be installed in a number of household appliances of known type in the same simple manner and at the same low cost, without requiring substantial modifications to said appliances.

Although the present invention is explained above by means of a detailed description of the embodiments thereof shown in the drawings the present invention is not obviously limited to the embodiments described above and shown on the drawings; on the contrary, all the variants and/or changes to the embodiments described and shown on the accompanying drawings will appear obvious and immediate to a person skilled in the art.

For example, according to a variant embodiment, the device according to the present invention may be equipped with additional components, e.g. a pump, particularly peristaltic, for injecting liquids into the inner space 81, in addition to those injected through the inlet 83. By way not non-limiting example, the pump may be inserted between the inlet section 801 (figure 4) and the motor 6, so that it can be rotated by said motor 6 and transmit the rotation to the hollow body 9, e.g. by rotating the shaft 5.

The scope of protection of the present invention is thus defined by the claims.

## Claims

1. A flow diverter device (100) for handling flows of fluids, such as gases and/or liquids, in particular in household appliances, such as washing machines, dishwashers and similar household appliances, said device comprising a first tubular body (8) which defines an inner space (81) and comprises an inlet opening (82) for the introduction of said fluids into said inner space (81), and a plurality of first radial draining and delivering openings (84) for draining or delivering said fluids from said inner space (81), wherein said device (100) comprises a second tubular closing and diverting body (9) accommodated in said inner space (81), said second tubular closing and diverting body (9) comprising a plurality of second radial draining and delivering openings (91) and being switchable by rotation and positioned in a plurality of positions, each with a different radial orientation, wherein said device (100) comprises means (5) accommodated in said inner space (81) for putting said second tubular body (9) into rotation from the inside, in that said means (5) engage an end portion (910) of said second tubular closing and diverting body (9), and thus in that the operation of said means (5) results in switching by rotation of said second tubular closing and delivering body (9) and in the positioning of at least one of said second radial draining and delivering openings (91) at at least one of said first radial draining and delivering openings (84), wherein said means (5) for putting said second tubular body (9) into rotation from the inside engage the end portion (910) of said second tubular body (9) positioned further upstream with respect to said inlet opening (82), wherein said second tubular body (9) consists of a plurality of mutually constrained but mutually releasable sections (90), wherein each of said sections (90) comprises a female-type end portion (904) and an opposite male-type end portion (903), **characterized in that** each of said female-type end portions (904) defines a flare adapted to receive a male-type end portion (903), and **in that** the inner surface of said flare comprises a plurality of projections (912) radially arranged, each of said projections (912) being adapted to engage a corresponding recess or notch (913) of a male-type end portion (903).

2. A device (100) according to claim 1, **characterized in that** said means (5) for putting said second tubular body (9) into rotation from the inside comprise a shaft (5) adapted to be rotated about a rotation axis (X), substantially parallel to the common longitudinal axis of said first tubular body (8) and said second tubular body (9), by electromechanical means (6), such as an electric motor or the like.

3. A device (100) according to one of the claims 1 and 2, **characterized in that** the adjacent sections (90) of said second tubular body (9) are adapted to be connected according to a plurality of different mutual radial orientations.

4. A device (100) according to claim 3, **characterized in that** said first tubular body (8) consists of a plurality of mutually connected but mutually releasable sections (80).

5. A device (100) according to claim 4, **characterized in that** each of said sections (80) of said first tubular body (8) comprises a female-type end portion (804) and an opposite male-type end portion (803).

6. A device (100) according to claim 5, **characterized in that** each of said female-type end portions (804) defines a flare adapted to receive a male-type end portion (803), and **in that** said flare defines a plurality of tapered radial openings (805) each adapted to be engaged by a projection (808) of a male-type end (803) substantially according to a bayonet-like connection.

7. A device (100) according to one of the claims from 1 to 6, **characterized in that** the adjacent sections (80) of said first tubular body (8) are mutually connectable according to a plurality of different radial orientations.

8. A device (100) according to one of the claims from 1 to 7, **characterized in that** said device (100) comprises electromechanical means (6) for the operation of said means (5) accommodated in said inner space (81) for putting said second tubular body (9) into rotation from the inside.

9. A device (100) according to claim 8, **characterized in that** said electromechanical means (6) comprise an electric AC or DC motor (7) coupled to an encoder.

10. A hydraulic system or circuit, in particular for household appliances, such as washing machines, dishwashers and similar household appliances, **characterized in that** said system or circuit comprises a flow diverter device (100) according to one of claims 1 to 9.

11. A household appliance, such as for example a washing machine, a dishwasher or a similar household appliance, comprising at least one system or hydraulic circuit, **characterized in that** it comprises a hydraulic system or circuit according to claim 10.

## Patentansprüche

1. Strömungsumlenkvorrichtung (100) zum Handhaben von Strömungen von Fluiden, wie Gasen und/oder Flüssigkeiten, insbesondere in Haushaltsgeräten, wie Waschmaschinen, Geschirrspülern und ähnlichen Haushaltsgeräten, wobei die Vorrichtung einen ersten rohrförmigen Körper (8) umfasst, der einen Innenraum (81) definiert und eine Einlassöffnung (82) zum Einführen der Fluide in den Innenraum (81) und eine Vielzahl von ersten radialen Ablass- und Abgabeöffnungen (84) zum Ablassen oder Abgeben der Fluide aus dem Innenraum (81) umfasst, wobei die Vorrichtung (100) einen zweiten rohrförmigen Verschluss- und Umlenkkörper (9) umfasst, der in dem Innenraum (81) untergebracht ist, wobei der zweite rohrförmige Verschluss- und Umlenkkörper (9) eine Vielzahl von zweiten radialen Ablass- und Abgabeöffnungen (91) umfasst und durch Drehung schaltbar und in einer Vielzahl von Positionen positioniert ist, die jeweils eine unterschiedliche radiale Ausrichtung aufweisen, wobei die Vorrichtung (100) Mittel (5) umfasst, die in dem Innenraum (81) untergebracht sind, um den zweiten rohrförmigen Körper (9) von innen in Drehung zu versetzen, indem die Mittel (5) in einen Endabschnitt (910) des zweiten rohrförmigen Verschluss- und Umlenkkörpers (9) eingreifen, und somit dadurch, dass die Betätigung der Mittel (5) zu einem Schalten durch Drehung des zweiten rohrförmigen Verschluss- und Abgabekörpers (9) und zu der Positionierung von mindestens einer der zweiten radialen Ablass- und Abgabeöffnungen (91) an mindestens einer der ersten radialen Ablass- und Abgabeöffnungen (84) führt, wobei die Mittel (5), um den zweiten rohrförmigen Körper (9) von innen in Drehung zu versetzen, in den Endabschnitt (910) des zweiten rohrförmigen Körpers (9) eingreifen, der in Bezug auf die Einlassöffnung (82) weiter stromaufwärts positioniert ist, wobei der zweite rohrförmige Körper (9) aus einer Vielzahl von gegenseitig festgespannten, jedoch gegenseitig lösbaren Abschnitten (90) besteht, wobei jeder der Abschnitte (90) einen buchsenartigen Endabschnitt (904) und einen gegenüberliegenden steckerartigen Endabschnitt (903) umfasst, **dadurch gekennzeichnet, dass** jeder der buchsenartigen Endabschnitte (904) eine Aufweitung definiert, die angepasst ist, um einen steckerartigen Endabschnitt (903) aufzunehmen, und **dadurch, dass** die innere Oberfläche der Aufweitung eine Vielzahl von Vorsprüngen (912) umfasst, die radial angeordnet sind, wobei jeder der Vorsprünge (912) angepasst ist, um eine entsprechende Ausnehmung oder Kerbe (913) eines steckerartigen Endabschnitts (903) einzugreifen.

2. Vorrichtung (100) nach Anspruch 1, **dadurch gekennzeichnet, dass** die Mittel (5), um den zweiten rohrförmigen Körper (9) von innen in Drehung zu versetzen, eine Welle (5) umfassen, die durch elektromechanische Mittel (6), wie einen Elektromotor oder dergleichen, um eine Drehachse (X) gedreht werden kann, die im Wesentlichen parallel zur gemeinsamen Längsachse des ersten rohrförmigen Körpers (8) und des zweiten rohrförmigen Körpers (9) ist.

3. Vorrichtung (100) nach einem der Ansprüche 1 und 2, **dadurch gekennzeichnet, dass** die benachbarten Abschnitte (90) des zweiten rohrförmigen Körpers (9) so angepasst sind, dass sie gemäß einer Vielzahl von verschiedenen gegenseitigen radialen Ausrichtungen verbunden werden können.

4. Vorrichtung (100) nach Anspruch 3, **dadurch gekennzeichnet, dass** der erste rohrförmige Körper (8) aus einer Vielzahl von miteinander verbundenen, jedoch gegenseitig lösbaren Abschnitten (80) besteht.

5. Vorrichtung (100) nach Anspruch 4, **dadurch gekennzeichnet, dass** jeder der Abschnitte (80) des ersten rohrförmigen Körpers (8) einen buchsenartigen Endabschnitt (804) und einen gegenüberliegenden steckerartigen Endabschnitt (803) umfasst.

6. Vorrichtung (100) nach Anspruch 5, **dadurch gekennzeichnet, dass** jeder der buchsenartigen Endabschnitte (804) eine Aufweitung definiert, die angepasst ist, um einen steckerartigen Endabschnitt (803) aufzunehmen, und **dadurch, dass** die Aufweitung eine Vielzahl von sich verjüngenden radialen Öffnungen (805) definiert, die jeweils angepasst sind, um von einem Vorsprung (808) eines steckerartigen Endes (803) im Wesentlichen gemäß einer bajonettartigen Verbindung in Eingriff genommen zu werden.

7. Vorrichtung (100) nach einem der Ansprüche 1 bis 6, **dadurch gekennzeichnet, dass** die benachbarten Abschnitte (80) des ersten rohrförmigen Körpers (8) gemäß einer Vielzahl von verschiedenen radialen Ausrichtungen miteinander verbindbar sind.

8. Vorrichtung (100) nach einem der Ansprüche 1 bis 7, **dadurch gekennzeichnet, dass** die Vorrichtung (100) elektromechanische Mittel (6) zur Betätigung der in dem Innenraum (81) untergebrachten Mittel (5) umfasst, um den zweiten rohrförmigen Körper (9) von innen in Drehung zu versetzen.

9. Vorrichtung (100) nach Anspruch 8, **dadurch gekennzeichnet, dass** die elektromechanischen Mittel (6) einen elektrischen Wechsel- oder Gleichstrommotor (7) umfassen, der mit einem Encoder gekoppelt ist.

10. Hydraulisches System oder Kreislauf, insbesondere für Haushaltsgeräte, wie Waschmaschinen, Geschirrspüler und ähnliche Haushaltsgeräte, **dadurch gekennzeichnet, dass** das System oder der Kreislauf eine Strömungsumlenkvorrichtung (100) nach einem der Ansprüche 1 bis 9 umfasst.

11. Haushaltsgerät, wie beispielweise eine Waschmaschine, ein Geschirrspüler oder ein ähnliches Haushaltsgerät, mit mindestens einem System oder Hydraulikkreislauf, **dadurch gekennzeichnet, dass** es ein hydraulisches System oder Kreislauf nach Anspruch 10 umfasst.

## Revendications

1. Dispositif de déviation de flux (100) pour traiter des flux de fluides, tels que des gaz et/ou des liquides, en particulier dans des appareils ménagers, tels que des lave-linges, des lave-vaisselles et des appareils ménagers similaires, ledit dispositif comprenant un premier corps tubulaire (8) qui définit un espace intérieur (81) et comprend une ouverture d'entrée (82) pour l'introduction desdits fluides dans ledit espace intérieur (81), et une pluralité de premières ouvertures radiales de drainage et de distribution (84) pour drainer ou distribuer lesdits fluides depuis ledit espace intérieur (81), dans lequel ledit dispositif (100) comprend un second corps tubulaire de fermeture et de dérivation (9) logé dans ledit espace intérieur (81), ledit second corps tubulaire de fermeture et de dérivation (9) comprenant une pluralité de seconds orifices radiaux de drainage et de distribution (91) et pouvant être commutés par rotation et positionnés dans une pluralité de positions, chacune ayant une orientation radiale différente, chacune avec une orientation radiale différente, dans lequel ledit dispositif (100) comprend des moyens (5) logés dans ledit espace intérieur (81) pour mettre en rotation ledit second corps tubulaire (9) depuis l'intérieur, en ce que lesdits moyens (5) engagent une partie d'extrémité (910) dudit second corps tubulaire de fermeture et de dérivation (9), et ainsi en ce que l'actionnement desdits moyens (5) entraîne la commutation par rotation dudit second corps tubulaire de fermeture et de distribution (9) et le positionnement d'au moins un desdits seconds orifices radiaux de vidange et de distribution (91) au niveau d'au moins un desdits premiers orifices radiaux de vidange et de distribution (84), lesdits moyens (5) de mise en rotation dudit second corps tubulaire (9) depuis l'intérieur engageant la partie terminale (910) dudit second corps tubulaire (9) positionnée plus en amont par rapport à ladite ouverture d'entrée (82), dans lequel ledit deuxième corps tubulaire (9) consiste en une pluralité de sections (90) mutuellement contraintes mais mutuellement libérables, dans lequel chacune de ces sections (90) comprend une partie d'extrémité de type femelle (904) et une partie d'extrémité de type mâle opposée (903), **caractérisé en ce que** chacune de ces parties d'extrémité de type femelle (904) définit un évasement adapté pour recevoir une partie d'extrémité de type mâle (903), et **en ce que** la surface intérieure de cet évasement comprend une pluralité de projections (912) disposées radialement, chacune de ces projections (912) étant adaptée pour s'engager dans un renfoncement ou une encoche correspondante (913) d'une partie d'extrémité de type mâle (903).

2. Dispositif (100) selon la revendication 1, **caractérisé en ce que** lesdits moyens (5) de mise en rotation dudit second corps tubulaire (9) depuis l'intérieur comprennent un arbre (5) apte à être mis en rotation autour d'un axe de rotation (X), sensiblement parallèle à l'axe longitudinal commun dudit premier corps tubulaire (8) et dudit second corps tubulaire (9), par des moyens électromécaniques (6), tels qu'un moteur électrique ou similaire.

3. Dispositif (100) selon l'une des revendications 1 et 2, **caractérisé en ce que** les sections adjacentes (90) dudit second corps tubulaire (9) sont adaptées pour être connectées selon une pluralité de différentes orientations radiales mutuelles.

4. Dispositif (100) selon la revendication 3, **caractérisé en ce que** ledit premier corps tubulaire (8) consiste en une pluralité de sections (80) mutuellement connectées mais mutuellement libérables.

5. Dispositif (100) selon la revendication 4, **caractérisé en ce que** chacune desdites sections (80) dudit premier corps tubulaire (8) comprend une partie terminale de type femelle (804) et une partie terminale opposée de type mâle (803).

6. Dispositif (100) selon la revendication 5, **caractérisé en ce que** chacune desdites parties d'extrémité de type femelle (804) définit un évasement adapté pour recevoir une partie d'extrémité de type mâle (803), et **en ce que** ledit évasement définit une pluralité d'ouvertures radiales coniques (805) chacune adaptée pour être engagée par une projection (808) d'une extrémité de type mâle (803) sensiblement selon une connexion en forme de baïonnette.

7. Dispositif (100) selon l'une des revendications de 1 à 6, **caractérisé en ce que** les sections adjacentes (80) dudit premier corps tubulaire (8) peuvent être mutuellement connectées selon une pluralité d'orientations radiales différentes.

8. Dispositif (100) selon l'une des revendications de 1 à 7, **caractérisé en ce que** ledit dispositif (100) comprend des moyens électromécaniques (6) pour l'actionnement desdits moyens (5) logés dans ledit espace intérieur (81) pour la mise en rotation dudit second corps tubulaire (9) depuis l'intérieur.

9. Dispositif (100) selon la revendication 8, **caractérisé en ce que** lesdits moyens électromécaniques (6) comprennent un moteur électrique à courant alternatif ou continu (7) couplé à un encodeur.

10. Système ou circuit hydraulique, en particulier pour les appareils ménagers, tels que les lave-linges, les lave-vaisselles et les appareils ménagers similaires, **caractérisé en ce que** ledit système ou circuit comprend un dispositif de dérivation de flux (100) selon l'une des revendications 1 à 9.

11. Appareil ménager, tel que par exemple un lave-linge, un lave-vaisselle ou un appareil ménager similaire, comprenant au moins un système ou circuit hydraulique, **caractérisé en ce qu'il** comprend un système ou circuit hydraulique selon la revendication 10.
